Europäisches Patentamt

European Patent Office

Office européen des brevets

(11) Publication number: **0 157 306 B1**

# EUROPEAN PATENT SPECIFICATION

(45) Date of publication of patent specification: **29.05.91**    (51) Int. Cl.⁵: **G06F  9/38**

(21) Application number: **85103348.0**

(22) Date of filing: **22.03.85**

(54) **High speed processor.**

(30) Priority: **02.04.84 US 595775**

(43) Date of publication of application:
**09.10.85 Bulletin  85/41**

(45) Publication of the grant of the patent:
**29.05.91 Bulletin  91/22**

(84) Designated Contracting States:
**AT DE FR GB**

(56) References cited:
**US-A- 3 242 465**
**US-A- 4 085 450**
**US-A- 4 395 758**

(73) Proprietor: **International Business Machines Corporation**
**Old Orchard Road**
**Armonk, N.Y. 10504(US)**

(72) Inventor: **Ngai, Chuck Hong**
**331 Hillside Terrace**
**Endwell New York 13760(US)**
Inventor: **Wassel, Edward Richard**
**2921 Ricky Drive**
**Endwell New York 13760(US)**

(74) Representative: **Rudolph, Wolfgang, Dipl.-Ing.**
**IBM Deutschland GmbH Schönaicher Strasse 220**
**W-7030 Böblingen(DE)**

## Description

The present invention relates to a high speed processor according to the preamble of claim 1.

There are at least two different types of multiprocessor computer system in the prior art: (1) in the first type, each of at least two processors executes all of the instructions of one program, and operate simultaneously or concurrently for the purpose of improving the reliability of the processor portion of the computer system; and (2) in the second type, each of at least two processors executes different programs or performs different tasks or functions. These types of multiprocessor computers are described in US-A-4,152,763 and in US-A-4,395,758.

The performance of a computer system is based, in part, upon the speed at which the processor or processors within the computer system execute a set of instructions. Generally speaking, the set of instructions is executed sequentially, each of the instructions being executed at a certain rate. Some of the instructions which comprise the set of instructions are easy to implement in hardware and may be classified as simple instructions. Other instructions are more difficult to implement in hardware and may be classified as complex instructions. The simple instructions are more frequently executed than are the complex instructions. However, in spite of the fact that the simple instructions are more frequently executed than are the complex instructions, the instructions of the set of instructions (including the simple, more frequently executed instructions) are usually executed sequentially at the certain rate. Since the performance of the computer system may be measured in terms of the time elapsed in sequentially executing each of the instructions of the set of instructions, the performance of the computer system could be improved if the simple, more frequently executed instructions within the set of instructions are executed more rapidly than the complex, less frequently executed instructions.

A data processing system which solves the problem of efficiently expanding the basic data processing system so that it is capable of performing new operations and/or the same operations more efficiently, as, for example, at higher speed, is described in US-A-3,242,465. This data processing system has a high speed processor, with first processing means for rapidly executing a first subset of instructions, and second processing means which is the basic system executing the remaining subset. However, this prior art does not show first means for storing an instruction as being located in the first (added) processing system. The first means for storing an instruction is instead located in the second (basic) processing means.

Accordingly, it is the object of the present invention to improve the performance of a computer system by executing the simple, more frequently executed instructions of a set of instructions of one program more rapidly than the complex, less frequently executed instructions of the one program; and to execute the simple, more frequently executed instructions more rapidly than the complex, less frequently executed instructions by utilizing a special high speed processor in addition to a main processor, the high speed processor executing the simple, more frequently executed instructions of the one program and the main processor executing the complex, less frequently executed instructions of the one program, the rate at which the high speed processor executes an instruction being greater than the rate at which the main processor executes an instruction.

The solution is described in the characterizing part of claim 1. The multiprocessor system of the present invention is classified within a third type of multiprocessor system as contrasted with the first type and the second type of multiprocessor system discussed in the description of the prior art section of this application. In the third type, one program is executed by both of the processors of the multiprocessor system; however, each processor executes a different subset of instructions of the one program. The processors execute their instructions of the one program non-concurrently, that is, when one processor is executing an instruction, the operation of the other processor is suspended. One processor executes selected, specific instructions of the one program for the purpose of improving the performance of the computer system. The selected, specific instructions of the one program, executed by the one processor, are "simple" and "more frequently executed" than are the other "complex" instructions of the one program. The one processor is also designed to execute the selected instructions very rapidly for the purpose of improving the performance of the computer system. This particular processor is termed a "high speed processor".

The rapid execution of the selected "simple" and "more frequently executed" instructions is accomplished by overlapping the execution of two sequential instructions. That is, while a simple instruction is being executed, the next instruction in the sequence is being prepared for execution. When the high speed processor is not executing a simple instruction, the other processor, the main processor of the computer system, is executing the complex, less frequently executed instructions. Therefore, the instruction processing time, associated with the execution of the set of instructions of the one program, is decreased by a factor of approximately 40 %.

A full understanding of the present invention will be obtained from a reading of the detailed description given hereinbelow and the accompanying drawings, which are given by way of illustration only, and thus are not limitative of the present invention, and wherein:

Figure 1     illustrates a high speed processor according to the present invention, connected to a conventional data processing system, for executing the more frequently executed instructions of a set of instructions to be executed by the data processing system;

Figure 2     illustrates a detailed construction of the high speed processor according to the present invention;

Figure 3     illustrates a detailed construction of the instruction decode and control circuit 12c shown in Figure 2;

Figure 4     illustrates a detailed construction of the general purpose registers 12d shown in Figure 2;

Figure 5     illustrates a chart including several example instructions and a percent mix figure associated with each instruction; and

Figure 6     illustrates a detailed construction of the opcode decode control circuit 12c1 shown in Figure 3.

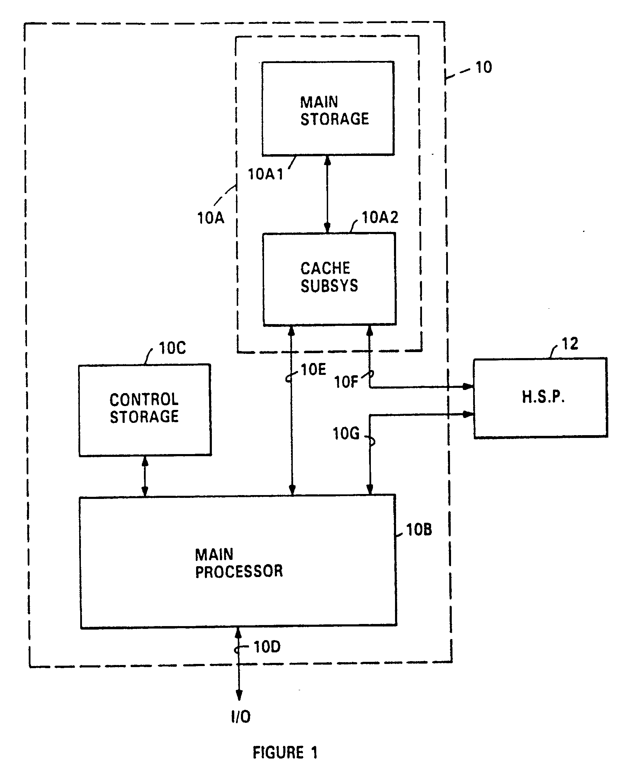

Referring to Figure 1, a conventional data processing system 10 is illustrated including a memory 10a, a main processor 10b connected to the memory 10a via lines 10e, 10f, and 10g and a control storage 10c representing a Read Only Memory (ROM) connected to the main processor 10b. The memory 10a includes a main storage 10a1 and a cache subsystem 10a2 connected to the main storage 10a1. Line 10e interconnects the cache subsystem 10a2 to the main processor 10b and is utilized for the transfer of data. Lines 10f/10g are utilized for the transfer of instructions. The main processor 10b is connected to various peripheral devices via an input/output line 10d. Details with regard to the construction of the data processing system may be found in a technical manual directed to the construction and the principles of operation of the IBM 370 computer, this manual being identified by the number "GA22-7000-9", the disclosure of which is incorporated by reference into the specification of this application.

In accordance with the present invention, a high speed processor 12 is interconnected between memory 10a and main processor 10b via lines 10f and 10g. The high speed processor 12 receives instructions from memory 10a. Of those instructions received by the high speed processor 12, some instructions are more frequently executed than others. The high speed processor 12 determines if a received instruction falls within the "more frequently executed" category. If the received instruction does fall within this category, the main processor 10b is prevented from executing the instruction, and the high speed processor 12 executes the instruction. However, if the instruction does not fall within the "more frequently executed" category, the high speed processor 12 signals the main processor 10b. As a result, the main processor 10b is permitted to execute the instruction. In this case, the operation of the high speed processor 12 is suspended. Since the high speed processor 12 is specifically designed to execute certain selected instructions which fall within the "more frequently executed" category, the speed at which these selected instructions are executed by the high speed processor 12 is much greater than the speed at which the other remaining instructions are executed by the main processor. Therefore, the performance of the computer system of the present invention, utilizing the high speed processor, is optimized and/or increased relative to the computer system of the prior art, wherein the high speed processor 12 is not utilized.

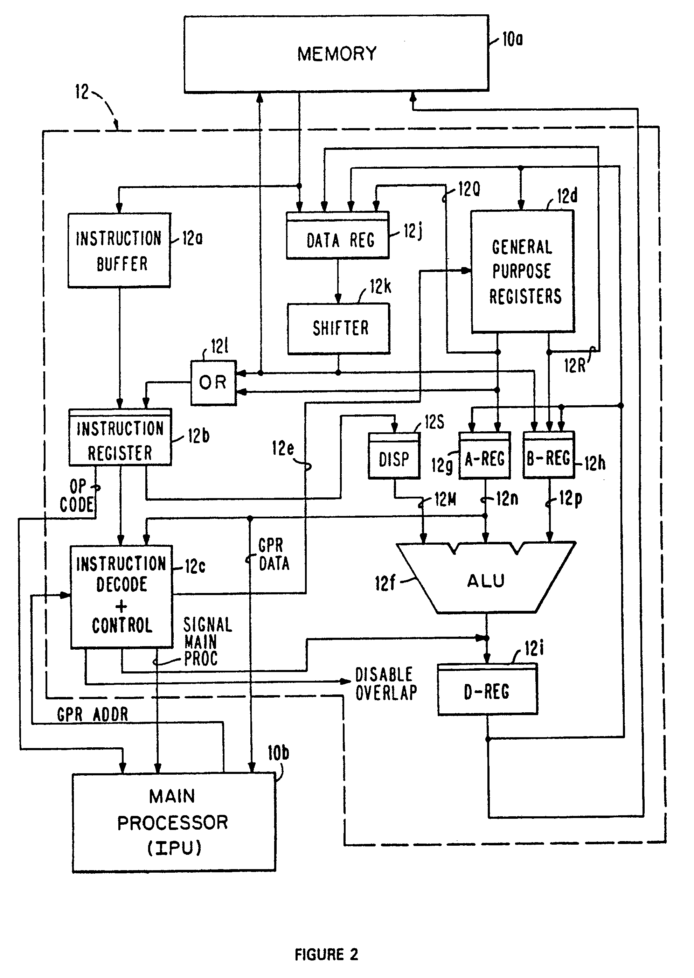

Referring to Figure 2, a detailed construction of the high speed processor 12 according to the present invention is illustrated. In Figure 2, the high speed processor 12 comprises an instruction buffer 12a connected to memory 10a for temporarily storing an instruction to be executed. An instruction register 12b is connected to the instruction buffer 12a for receiving the instruction and executing the instruction. An output of the instruction register 12b is connected to the main processor 10b for transferring the instruction to the main processor 10b. The main processor 10b will execute the instruction in the event the instruction cannot be executed by the high speed processor 12. The output of the instruction register 12b is also connected to an instruction decode and control circuit 12c for decoding the instruction being executed in the instruction register 12b. The main processor 10b is connected to the instruction decode and control circuit 12c for supplying address information associated with locations within the general purpose registers 12d in the event the main processor desires to retrieve one or more operands from the general purpose registers 12d for the purpose of executing the current instruction. The instruction decode and control unit 12c is connected to the main processor 10b via a line labelled "signal main processor" for the purpose of signalling the main processor to either execute the instruction or not execute the instruction. If the "signal main processor" line is high (binary 1), the main processor 10b will execute the instruction. However, if the "signal main processor" line is low (binary 0), the main processor will be prevented from executing the instruction. If the main processor 10b fails to execute the instruction, the high speed processor 12 will execute the instruction.

The instruction decode and control circuit 12c is connected to a set of general purpose registers 12d via line 12e. The general purpose registers 12d are connected to an arithmetic logic unit (ALU) 12f via an A-register 12g. The general purpose registers 12d are also connected to the ALU 12f via a B-register 12h. An output of the A-register 12g is connected to an input of the instruction decode and control circuit 12c. The output of the A-register 12g is also connected to an input of the main processor 10b for transferring the data (such as operands) stored in the general purpose registers 12d to the main processor 10b in the event the main processor is executing the instruction. The output of the instruction register 12b is also connected to a displacement register 12S for storing a displacement value therein. The output of the displacement register 12S is connected to the ALU 12f via line 12M. An output of the ALU 12f is connected to an input of a D-register 12i. An output of the instruction decode and control circuit 12c is further connected to the input of the D-register 12i. An output of the D-register 12i is connected to an input of the A-register 12g, the B-register 12h, and the general purpose registers 12d. An output of the D-register 12i is also connected to an input of the memory 10a.

The memory 10a is connected to an input of a data register 12j. An output of the D-register 12i is also connected to another input of the data register 12j. An output of the general purpose registers 12d, which is connected to the A-register 12g, is connected to another input of the data register 12j via line 12Q. An output of the general purpose registers 12d, which is connected to the B-register 12h, is connected to another input of the data register 12j via line 12R. An output of the data register 12j is connected to a byte shifter 12k for shifting the incoming bytes of data a certain amount in order to properly align the first bit of the data byte with a correct first bit position for the byte of data. The byte shifter 12k is connected to an input of the B-register 12h. The byte shifter 12k is also connected to an input of an OR gate 12L and to memory 10a. The output of the general purpose registers 12d, which is connected to the A-register 12g, is also connected to another input of the OR gate 12L. An output of OR gate 12L is connected to another input of the instruction register 12b.

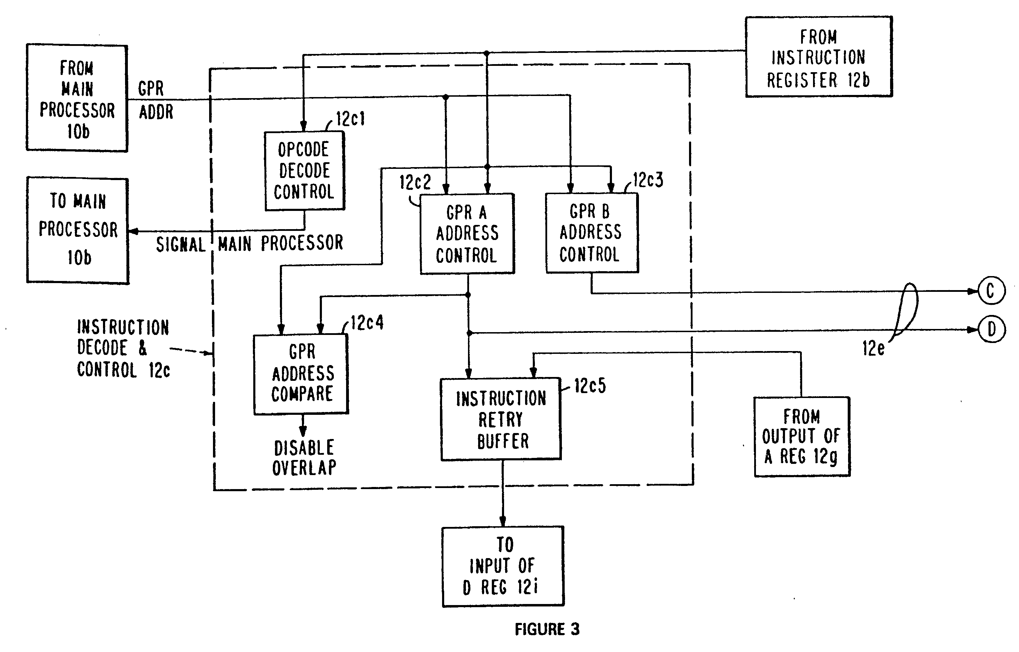

Referring to Figure 3, a detailed construction of the instruction decode and control circuit 12c is illustrated. In Figure 3, the instruction decode and control circuit 12c comprises an opcode decode control circuit 12c1 connected to the instruction register 12b for decoding the opcode of the instruction residing in the instruction register 12b to determine the type of instruction, for example, an EXECUTE instruction. The output of the opcode decode and control circuit 12c1 is connected to the main processor 10b. If the opcode decode control circuit 12c1 determines, from the instruction opcode, that the instruction falls within the "more frequently executed" type, the output signal generated from the opcode decode and control circuit 12c1, labelled "signal main processor", will be low (i.e. - a binary 0). In response to this low output signal, the main processor 10b will not execute the instruction. However, the high speed processor 12 will execute the instruction. If the opcode decode control circuit 12c1 determines that the instruction does not fall within the "more frequently executed" type, the output signal generated from the opcode decode and control circuit 12c1 will be high (a binary 1). In response to this high output signal, the main processor 10b will execute the instruction and the high speed processor suspends its operation.

The instruction decode and control circuit 12c further comprises a GPR A address control 12c2 and a GPR B address control 12c3 connected to the instruction register 12b for receiving and storing the address information from the instruction stored in the instruction register 12b. An output from the GPR A address control 12c2 and an output from the GPR B address control 12c3 collectively constitute line 12e, line 12e being connected to the general purpose registers 12d. The instruction register 12b is also connected to a GPR address compare circuit 12c4. An output of the GPR A address control circuit 12c2 is also connected to the GPR address compare circuit 12c4. The GPR address compare circuit 12c4 compares the incoming address, destined for storage in the GPR A address control 12c2, with the address being generated from the GPR A address control circuit 12c2, and suspends the execution of the next instruction if the compared addresses are the same. Alternatively, the address compare circuit 12c4 may wrap the result from ALU 12f back into the B-register 12h in order to allow further processing on said result. In view of the overlapped execution of two sequential instructions mentioned previously, if the incoming address from the next instruction to be executed is the same as the address being generated from the GPR A address control circuit 12c2, associated with the current instruction being executed, the GPR address compare circuit 12c4 generates a disable overlap signal. The disable overlap signal (1) prevents the instruction decode and control circuit 12c from addressing the general purpose registers 12d via line 12e, (2) prevents the A-register 12g and the B-register 12h from being enabled, and (3) prevents the next instruction from being pre-decoded by the opcode decode control circuit 12c1. As a result, while the ALU 12f is performing a processing operation on the operands previously withdrawn from the general purpose registers 12d, the disable overlap signal generated from the address compare circuit 12c4 will prevent the operands associated with next instruction from being withdrawn from the general purpose registers 12d.

The output of the GPR A address control circuit 12c2 is also connected to one input of an instruction retry buffer 12c5. The output from the A-register 12g is connected to another input of the instruction retry buffer 12c5. An output from the instruction retry buffer 12c5 is connected to the input of the D-register 12i. When the instruction being executed directs the operation of two operands on one another, one of the two operands is stored in the instruction retry buffer 12c5 prior to execution of the instruction. If a machine check occurs, the instruction retry buffer 12c5 has the one operand in storage in the event the instruction should be re-executed. As will be indicated below, the one operand must be stored in the instruction retry buffer 12c5 prior to execution of the instruction. The other operand is not destroyed as a result of execution of the instruction, and, therefore, need not be pre-stored.

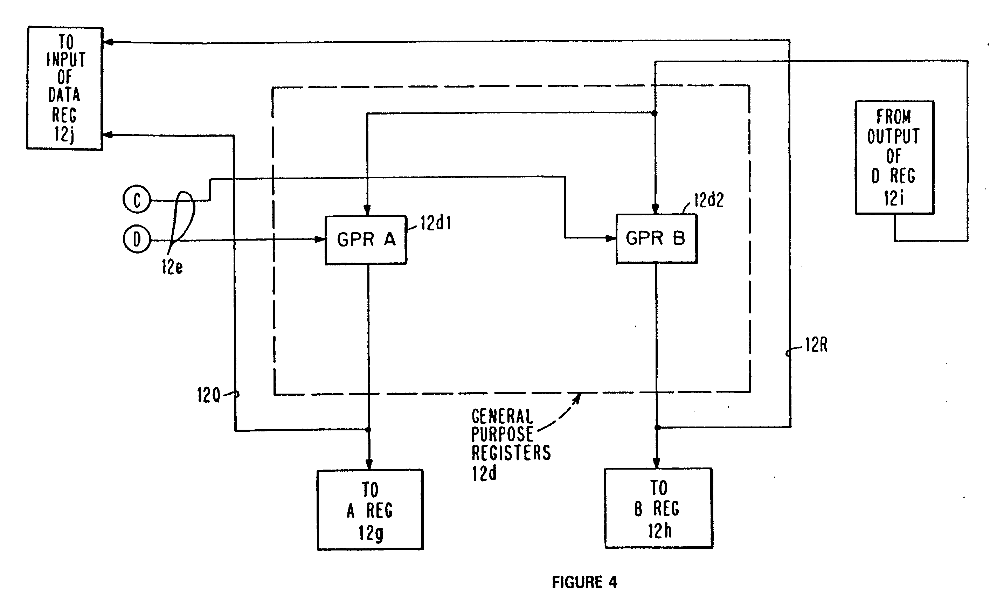

Referring to Figure 4, a detailed construction of the general purpose registers 12d of Figure 2 is illustrated. In Figure 4, the general purpose registers 12d comprise a general purpose A group of registers 12d1 (GPR A) and a general purpose B group of registers 12d2 (GPR B). It should be noted that the contents of the GPR B group 12d2 is an exact copy of the contents of the GPR A group 12d1. The output from the D-register 12i is connected to each of the GPR A group and the GPR B group, 12d1 and 12d2, respectively. The GPR A address control 12c2 is connected to the GPR A group 12d1 via line 12e. The GPR B address control 12c3 is connected to the GPR B group 12d2 via line 12e. The GPR A address control 12c2 and the GPR B address control 12c3 are address registers for addressing locations within the GPR A group 12d1 and the GPR B group 12d2, respectively. The GPR A group 12d1 is connected to the input of A-register 12g. The GPR B group 12d2 is connected to the input of B-register 12h. Each of the outputs from GPR A group and GPR B group are connected to the input of the data register 12j.

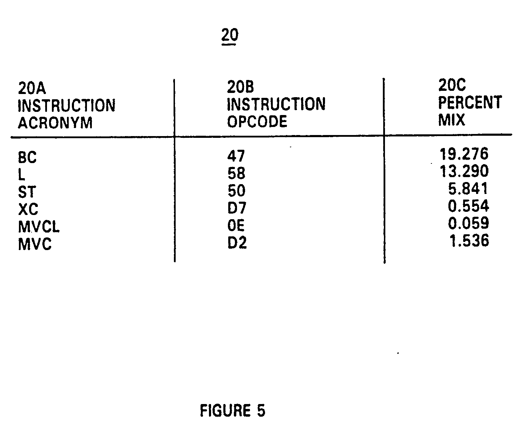

Referring to Figure 5, a chart 20 is illustrated, the chart including several example "simple" and "more frequently executed" instructions and including several example "complex" and "less frequently executed" instructions. In Figure 5, the chart is subdivided into three columns. A first column 20a includes a plurality of instruction acronyms. A second column 20b includes a plurality of instruction opcodes, an opcode corresponding to each instruction acronym of column 20a. A third column 20c includes a plurality of percent mix figures, a mix figure corresponding to each instruction acronym of column 20a. An instruction acronym identifies a particular instruction. Since each instruction possesses a specific opcode, an instruction opcode also identifies a particular instruction. Therefore, the first and second columns 20a and 20b of chart 20 include instruction acronyms and opcodes for identifying specific instructions. Each instruction, on the average, appears in a set of instructions a certain plurality of times. When a figure representing the certain plurality is divided by the total number of instructions in the set of instructions, a percent mix figure is the result. Therefore, the third column 20c of chart 20 includes a plurality of mix figures, each mix figure representing a percentage of the total number of instructions within the set of instructions. In Figure 5, note that instructions "BC", "L", and "ST" represent approximately 19 %, 13 %, and 6 % of the total number of instructions within a set of instructions. However, note that instructions "XC", "MVCL", and "MVC" represent approximately 0.5 %, 0.06 %, and 1.5 % of the total number of instructions within the set of instructions. Based on these percentage mix figures, instructions "BC", "L", and "ST" represent simple, more frequently executed instructions whereas instructions "XC", "MVCL", and "MVC" represent complex, less frequently executed instructions.

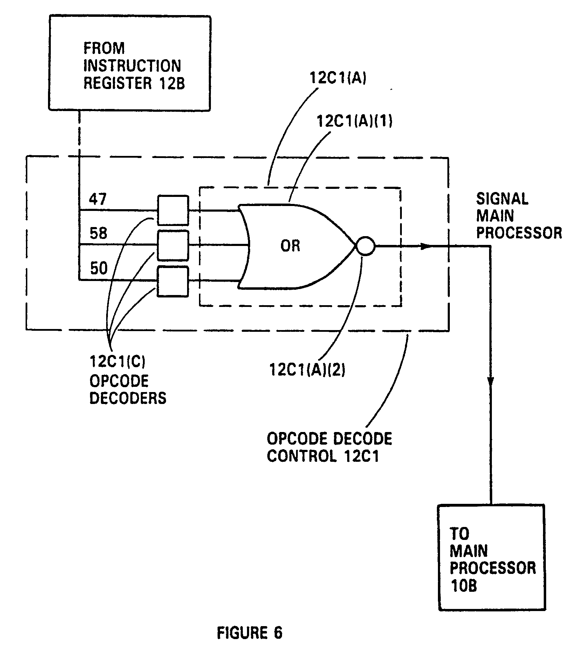

Referring to Figure 6, a detailed construction of at least a portion of the opcode decode control circuit 12c1 of Figure 3 is illustrated. In Figure 6, the opcode decode control circuit 12c1 includes a NOR gate 12c1(a). The input terminals of the NOR gate 12c1(a) are connected to the instruction register 12b via a plurality of opcode decoders 12c1(c). An opcode decoder 12c1(c) is connected to each of the input terminals of the NOR gate 12c1(a). Each of the opcode decoders 12c1(c) are designed to decode and respond to a different instruction opcode. For example, if the instruction is a "branch on condition (BC)" instruction, the opcode of the instruction is "47". Therefore, as shown in Figure 6, the first opcode decoder 12c1(c), connected to the first input terminal of the NOR gate 12c1(a), is designed to decode and respond to this instruction, the first opcode decoder generating an output signal. However, the other opcode decoders 12c1(c) fail to decode and respond to this opcode, since they are designed to decode and respond to different instruction opcodes. The output terminal of the NOR gate 12c1(a) is connected to the main processor 10b and generates the "signal main processor" output signal as shown in Figures 2 and 3.

The NOR gate 12c1(a) comprises an OR gate 12c1(a) (1) and an inverter 12c1(a) (2) connected to the output of the OR gate 12c1(a) (1).

The functional operation of the data processing system 10, in combination with the high speed processor 12, will be described in the paragraphs below with reference to Figure 1 of the drawings.

An instruction is withdrawn from memory 10a and is received by the high speed processor 12. If the instruction is one of a set of "more frequently executed" instructions, the high speed processor 12 executes the instruction. The main processor 10b is prevented from executing the instruction. However, if the instruction is not one of the set of "more frequently executed" instructions, the main processor 10b is not prevented from executing the instruction. In this case, the main processor 10b executes the instruction and the high speed processor 12 suspends its operation until the main processor 10b completes execution of the instruction. The control storage 10c is a Read Only Memory containing certain specific microcode instructions stored therein which are utilized to assist the main processor in the execution of an instruction. When the main processor 10b is permitted to execute the instruction, the main processor 10b executes the instruction in accordance with the microcode instructions stored within the control storage 10c. Since a large proportion of the instructions withdrawn from memory 10a fall within the "more frequently executed" category, these instructions are executed by the high speed processor 12.

Furthermore, when the high speed processor 12 executes the instructions, it is operating in an overlap execution mode. During the overlap execution mode, while the high speed processor 12 is executing a first instruction, it is preparing to commence execution of a second instruction in a sequence of instructions. As a result, due to its execution of the selected instructions in the overlap execution mode, the high speed processor 12 is capable of executing the "more frequently executed" instructions more rapidly than would be possible if the main processor 10b were to execute the selected "more frequently executed" instructions.

As a result, the instruction processing time, associated with the execution of the instructions withdrawn from memory 10a, is decreased by a factor of approximately forty percent (40 %). Therefore, the performance of the computer system of the present invention is improved relative to the computer systems of the prior art.

The functional operation of the high speed processor 12, illustrated in Figure 1, will be described in the paragraphs below with reference to Figures 2 through 4 of the drawings.

An instruction is withdrawn from memory 10a and is received by the high speed processor 12.

The instruction is temporarily stored in the instruction buffer 12a and is considered the "next instruction to be executed". The instruction is subsequently transmitted to and stored in the instruction register 12b for execution. When transmission of the instruction to the instruction register 12b is complete, prior to the execution of the instruction, the opcode decode and control circuit 12c1 of the instruction decode and control circuit 12c decodes the instruction for the purpose of determining if said instruction falls within the "more frequently executed" category. If the instruction does not fall within this category, the opcode decode control circuit 12c1 generates a high output signal, this high output signal being the "signal main processor" signal. In response to this high output signal, the main processor 10b executes the instruction. In this case, the operation of the high speed processor 12 is suspended. However, if the opcode decode and control circuit 12c1 determines that the instruction does fall within the "more frequently executed" category, the "signal main processor" output signal from the opcode decode control circuit 12c1 remains low. Therefore, the main processor 10b is prevented from executing this instruction.

Recall that the instruction address information associated with a first operand and further instruction address information associated with a second operand is stored in the GPR A address control 12c2 and the GPR B address control 12c3, respectively. Assume that the instruction stored in the instruction register 12b is an ADD instruction and that two operands are to be added together, the sum of the two operands being stored in the general purpose registers 12d. Assume further that both operands are currently stored in the general purpose registers 12d, one operand being stored in the GPR A group 12d1 and the other operand being stored in the GPR B group 12d2. Recall that the contents of the GPR A group 12d1 is an exact copy of the contents of the GPR B group 12d2. The address information stored in the GPR A address control 12c2 is used to address the GPR A group 12d1, and the address information stored in the GPR B address control 12c3 is used to address the GPR B group 12d2. In fact, groups 12d1 and 12d2 are simultaneously addressed by the address controls 12c2 and 12c3, respectively. As a result, the time consumed with respect to the addressing of the general purpose registers 12d is conserved. The conservation of this time assists in the optimization of the performance of the computer system.

When groups 12d1 and 12d2 are addressed, the operands stored therein are simultaneously withdrawn and stored in the A-register 12g and the B-register 12h, respectively. The arithmetic logic unit (ALU) 12f retrieves the operands from the A-register and the B-register and performs the instruction operation on the two operands, that is, adds them together forming a sum of the two operands. The sum is stored in the GPR A group 12d1 and in the GPR B group 12d2 within the general purpose registers 12d via the D-register 12i.

While the ALU 12f is performing the instruction operation on the two operands, the next instruction to be executed in the sequence of instructions is stored in the instruction register 12b and is being pre-decoded by the opcode decode control circuit 12c1 to determine if the next instruction falls within the "more frequently executed" category. Consequently, the high speed processor 12 is operating in the overlap execution mode in that the execution of the current instruction is overlapped with the preparation for execution of the next instruction in the sequence. As a result of this overlapped execution, the high speed processor 12 is capable of executing the current instruction more rapidly than would be possible if the main processor 10b were to execute the current instruction. However, as will be noted below, the address compare circuit 12c4 ensures that execution of the current instruction by the ALU 12f is complete before executing the next instruction in the sequence, that is, before the addressing of the general purpose registers 12d, associated with the execution of the next instruction, commences.

Assume that one operand is stored in the GPR B group 12d2 of the general purpose registers 12d and the other operand is stored in the memory 10a. As before, assume that an ADD instruction is stored in the instruction register 12b, whereby the one operand is to be added to the other operand, and the sum of the two operands is to be stored in the GPR B group 12d2 of the general purpose registers 12d. Before the operands may be added together, the memory 10a must be addressed for the purpose of withdrawing the other operand from the memory 10a. Therefore, when the opcode decode and control circuit 12c1 within the instruction decode and control circuit 12c decodes the instruction stored in the next instruction buffer 12b1 and determines that the instruction falls within the "more frequently executed" category, the "signal main processor" line is low, and the GPR A address control 12c2 and the GPR B address control 12c3, within the instruction decode and control circuit 12c, address the general purpose registers 12d and, in particular, the GPR A group 12d1 and the GPR B group 12d2. When the groups 12d1 and 12d2 are addressed by the GPR A address control 12c2 and the GPR B address control 12c3, respectively, a binary number is read from the GPR A group 12d1 and another binary number is read from the GPR B group 12d2, the binary numbers being stored in the A-register 12g and the B-register 12h. Further, the instruction stored in the instruction register 12b includes a displacement value. The instruction displacement value is stored in the displacement register 12S. A signal from the displacement register 12S, representing the displacement value, energizes the ALU 12f via line 12M. Signals from the A-register 12g and the B-register 12h, representing the binary numbers stored therein, energize the ALU 12f via lines 12N and 12P. The ALU 12f adds a subtotal, representing the sum of the binary numbers, to the displacement value thereby forming a sumtotal, the sumtotal being stored within the D-register 12i. The D-register 12i generates an address representing the sumtotal, the address energizing the memory 10a and addressing the memory 10a at a location corresponding to the other operand. The other operand is stored in the B-register 12h via the data register 12j and the byte shifter 12k. The byte shifter 12k aligns the received bytes of the other operand such that the first bit of the first byte of the other operand is aligned with a correct first bit position within the B-register 12h. The address control circuit 12c2 within the instruction decode and control circuit 12c addresses the GPR A group 12d1 within the general purpose register 12d and thereby reads the one operand therefrom for storage within the A-register 12g. The ALU 12f adds the one operand, stored in the A-register 12g, to the other operand, stored in the B-register 12h. The sum of the two operands is stored in the GPR B group 12d2 via the D-register 12i.

Assume that the instruction stored in the instruction register 12b is an EXECUTE instruction. This particular execute instruction comprises the following characteristic fields:
EX..MODIFY..SUBJECT INSTRUCTION, where EX indicates that the instruction is an execute instruction, MODIFY is a modify field, and SUBJECT INSTRUCTION indicates a subject instruction stored in memory 10a and includes a displacement value and address information relative to the contents of the GPR A group 12d1 and the GPR B group 12d2 disposed within the general purpose registers 12d. The displacement value, stored within the displacement register 12S, energizes the ALU 12f via line 12M. A signal originating from the GPR A address control 12c2 and from the GPR B address control 12c3, representing the address information, energizes the GPR A group 12d1 and the GPR B group 12d2 of the general purpose registers 12d via line 12e. The contents of the GPR A group and the GPR B group, disposed within the general purpose register 12d, energize the ALU 12f via lines 12N and 12P. The ALU 12f adds the displacement value to the contents of the GPR A group and the GPR B group forming another sum, this other sum being temporarily stored in the D-register 12i and addressing the memory 10a. The subject instruction is withdrawn from the memory 10a and temporarily stored in the data register 12j. The bytes of the subject instruction are shifted as needed in the byte shifter 12k and energize one input of the OR gate 12L.

The modify field (MODIFY) of the execute instruction addresses the GPR A group within the general purpose registers 12d via line 12e. Specific bytes of data are read from the GPR A group 12d1 within the general purpose register 12d in response to the addressing by the modify field data. The specific bytes of data energize the other input of the OR gate 12L. As a result, the bytes of the subject instruction, energizing one input of the OR gate 12L, are modified in accordance with the specific bytes of data energizing the other input of the OR gate 12L. A signal is generated from the OR gate 12L representing a modified subject instruction, the modified subject instruction being stored within the instruction register 12b for execution thereof.

If, during operation in the "overlap execution mode", the high speed processor 12 begins to address the general purpose registers 12d for the purpose of executing the next instruction prior to the completion of the execution of the current instruction by the ALU 12f, the address compare circuit 12c4 will suspend execution of the next instruction. The execution of the next instruction is suspended in the following manner. The GPR address compare circuit 12c4 compares the address of next instruction to be executed with the address of the current instruction being executed, appearing on the output of the GPR address control circuit 12c2. If the two addresses are the same, the address compare circuit 12c4 generates the disable overlap signal. The disable overlap signal (1) prevents the instruction decode and control circuit 12c from addressing the general purpose registers 12d via line 12e, (2) prevents the A-register 12g and the B-register 12h from being enabled, and (3) prevents the next instruction from being pre-decoded by the opcode decode control circuit 12c1. As a result, in this instance, the address compare circuit 12c4 suspends the execution of the next instruction until the execution of the current instruction is complete.

When the address control circuit 12c2 generates a signal representative of a location within the GPR A group 12d1, the location address is stored in the instruction retry buffer 12c5. A first operand corresponding to the contents of the location address is also stored in the instruction retry buffer via the output from the A-register 12g. In the event the instruction should be re-executed, that is, when a machine check should occur, the first operand is stored in the instruction retry buffer 12c5 and is available for use. It is not stored in the GPR A group 12d1 since the location in A-group 12d1 and B-group 12d2 corresponding to the first operand is overlayed by a result when execution of the instruction is complete. The second operand is still stored in the GPR A group 12d1 and the GPR B group 12d2 and is available for use since the contents of this group is not overlayed by a result when execution of the instruction is complete.

The contents of the GPR A group 12d1 and the GPR B group 12d2 are stored in memory 10a via lines 12Q and 12R, the data register 12j, and the shifter 12K.

The functional operation of the opcode decode control circuit 12c1 of Figure 3 will be described in the following paragraphs with reference to Figures 5 and 6 of the drawings.

In Figure 6, the opcode decoders 12c1(c) of NOR gate 12c1(a) are designed to decode and respond to the instructions shown in Figure 5 identified by acronyms "BC", "L", and "ST" and by opcodes "47", "58", and "50". For example, if the instruction stored in the instruction register 12b is a "BC" instruction having opcode "47", only the first opcode decoder 12c1(c), connected to NOR gate 12c1(a) input terminal, will respond. The first opcode decoder 12c1(c), connected to the input terminal of the NOR gate 12c1(a) labelled 47, will generate an output signal. However, the other opcode decoders will fail to generate an output signal. Assuming that this output signal is a high (binary 1) signal, the NOR gate 12c1(a) generates a low (binary 0) "signal main processor" output signal. As mentioned above, the "BC" instruction is a "simple, more frequently executed" instruction. Since the "signal main processor" output signal is low, the main processor 10b is prevented from executing the "BC" instruction. As a result, the high speed processor of the present invention executes the instruction. However, if the instruction stored in the instruction register 12b is an "XC" instruction having opcode "D7", none of the opcode decoders 12c1(c) respond. Therefore, none of the opcode decoders 12c1(c) generate an output signal. Each of the input terminals of the NOR gate 12c1(a) are low (binary 0). Due to the operation of inverter 12c1(a)(2), the output signal from the NOR gate 12c1(a) is high (binary 1). This output signal represents the "signal main processor" output signal illustrated in Figures 2 and 3. Since the "signal main processor" output signal is high, the main processor 10b executes the "XC" instruction. As mentioned above, the "XC" instruction is a "complex, less frequently executed" instruction. Since the "signal main processor" output signal is high, the main processor 10b executes the "XC" instruction since it is not prevented from executing the "XC" instruction.

## Claims

1. High speed processor for use in a computer system, said high speed processor executing a set of instructions, a first subset of said set of instructions being easier to implement in hardware and being more frequently executed than the remaining subset of said set of instructions, with first processing means (12) for rapidly executing said first subset of said set of instructions; and with second processing means (10b) executing said remaining subset of said set of instructions, characterized

   by first means (12a, 12b), located in the first processing means (12), for storing an instruction;

   by decode control means (12c) connected to said first means (12b) and to said second processing means (10b) for decoding said instruction stored in said first means and for determining if said instruction falls within the first subset of said set of instructions or within the remaining subset of said set of instructions, said decode control means (12c) developing a first output signal when said instruction falls within the remaining subset of said set of instructions and developing a second output signal when said instruction falls within the first subset of said set of instructions, said second processing means (10b) executing said instruction in response to said first output signal from said decode control means (12c), said second processing means (10b) being prevented from executing said instruction in response to said second output signal from said decode control means (12c).

2. High speed processor of claim 1, characterized in that said first processing means (12) further comprises:

   general purpose registers (12d) connected to said decode control means (12c) for storing at least one operand therein and for generating an output signal indicative of the one operand in response to said second output signal from said decode control means (12c);

   an arithmetic logic unit (12f) connected to said general purpose registers (12d) and responsive to the output signals from said general purpose registers (12d) for performing an arithmetic operation on said one operand and a second operand and for generating an output signal indicative of the results of said arithmetic operation.

3. High speed processor of claim 1, characterized in

   that said first processing means (12) operates in an overlap execution mode, the decode control means (12c) of said first processing means (12) pre-decoding a next instruction stored in said first means when said arithmetic logic unit (12f) of said first processing means (12) is performing an arithmetic operation on the operands associated with a current instruction being executed.

4. High speed processor of claims 1 and 3, characterized in that said decode control means (12c) further comprises:

   address control means (12c2; 12c3) connected to said second processing means (10b) for receiving address information from the instruction stored in said first means (12a, 12b) and for generating said second output signal when the instruction falls within the first subset of said set of instructions;

   address compare means (12c4) connected to an input of said address control means (12c3) and to an output of said address control means (12c2) for comparing said second output signal generated from said address control means with the address information being received by said address control means and generating a disable overlap signal when the address information associated with said second output signal is the same as the address information being received by said address control means, said disable overlap signal preventing the decode control means from pre-decoding the next instruction stored in said first means (12b); and

   a special retry buffer (12c5) for repeating the execution of an instruction.

## Revendications

1. Processeur ultra-rapide pour utilisation dans un système d'ordinateur, ledit processeur ultra rapide exécutant un jeu d'instructions, un premier sous-jeu dudit jeu d'instructions étant facile à mettre en oeuvre en matériel et étant plus fréquemment exécuté que le sous-jeu restant dudit jeu d'instructions, avec un premier moyen de traitement (12) pour exécuter rapidement ledit premier sous-jeu dudit jeu d'instructions; et avec un second moyen de traitement (10b) exécutant ledit sous-jeu restant dudit jeu d'instructions caractérisé

- par un premier moyen (12a, 12b) situé dans le premier moyen de traitement (12), pour mémoriser une instruction;

- par un moyen de commande de décodage (12c) relié audit premier moyen (12b) et audit second moyen de traitement (10b) pour décoder ladite instruction mémorisée dans ledit premier moyen et pour déterminer si ladite instruction tombe a l'intérieur du premier sous-jeu dudit jeu d'instructions ou à l'intérieur du sous-jeu restant dudit jeu d'instructions, ledit moyen de commande de décodage (12c) élaborant un premier signal de sortie lorsque ladite instruction tombe a l'intérieur du sous-jeu restant dudit jeu d'instructions et élaborant un second signal de sortie lorsque ladite instruction tombe a l'intérieur du premier sous-jeu dudit jeu d'instructions, ledit second moyen de traitement (10b) exécutant ladite instruction en réponse audit premier signal de sortie depuis ledit moyen de commande de décodage (12c), ledit second moyen de traitement (10b) étant empêché d'exécuter ladite instruction en réponse audit second signal de sortie depuis ledit moyen de commande de décodage (12c).

2. Processeur ultra-rapide selon la revendication 1, caractérisé en ce que ledit premier moyen de traitement (12) comprend de plus :

- des registres à usage général (12d) relié audit moyen de commande de décodage (12c) pour y mémoriser au moins un opérande et pour produire un signal de sortie indicatif du premier opérande en réponse audit second signal de sortie depuis ledit moyen de commande de décodage (12c);

- une unité logique arithmétique (12f) reliée aux dits registres à usage général (12d) et sensible aux signaux de sortie depuis lesdits registres à usage général (12d) pour effectuer une opération arithmétique sur ledit premier opérande et un second opérande et pour produire un signal de sortie indicatif des résultats de ladite opération arithmétique.

3. Processeur ultra-rapide selon la revendication 1, caractérisé en ce que ledit premier moyen de traitement (12) fonctionne dans un mode d'exécution en chevauchement, le moyen de commande de décodage (12c) dudit premier moyen de traitement (12) prédécodant une prochaine instruction mémorisée dans ledit premier moyen lorsque ladite unité logique arithmétique (12f) dudit premier moyen de traitement (12) est en cours d'effectuer une opération arithmétique sur les opérandes associés à une instruction en cours d'exécution.

4. Processeur ultra-rapide selon les revendications 1 et 3 caractérisé en ce que ledit moyen de commande de décodage (12c) comprend de plus :

- un moyen de commande d'adresses (12c2, 12c3), relié audit second moyen de traitement (10b) pour recevoir une information d'adresse depuis l'instruction mémorisée dans ledit premier moyen (12a, 12d) et pour produire ledit second signal de sortie lorsque l'instruction tombe à l'intérieur du premier sous-jeu dudit jeu d'instructions :

- un moyen de comparaison d'adresses (12c4) relié à une entrée dudit moyen de commande d'adresses (12c3) et à une sortie dudit moyen de commande d'adresses (12c2) pour comparer ledit second signal de sortie produit depuis le moyen de commande d'adresses avec l'information d'adresse étant reçu par ledit moyen de commande d'adresses et pour produire un signal de chevauchement interdit lorsque l'information d'adresse associée audit second signal de sortie est identique à l'information d'adresse étant reçu par ledit moyen de commande d'adresses, ledit signal de chevauchement interdit empêchant le moyen de commande de décodage de prédécoder la prochaine instruction mémorisée dans ledit premier moyen (12b); et

- un tampon de récupération spécial (12c5) pour répéter l'exécution d'une instruction.

**Ansprüche**

1. Hochgeschwindigkeitsprozessor zur Verwendung in einer EDV-Anlage, wobei der Hochgeschwindigkeitsprozessor Instruktionen eines Befehlsvorrates ausführt, dessen erster Teilvorrat einfacher in Hardware zu realisieren ist und häufiger als der übrige Teilvorrat ausgeführt wird, mit ersten Prozessormitteln, die den ersten Teilvorrat schnell ausführen, und mit zweiten Prozessormitteln, die den übrigen Teilvorrat ausführen, gekennzeichnet durch

erste, in den ersten Prozessormitteln (12) angeordnete, Speicher (12a, 12b) zur Speicherung eines Befehls;

Dekodierungssteuermittel (12c), die an die ersten Speicher (12b) und an die zweiten Prozessormittel (10b) angeschlossen sind, um den in den ersten Speichern gespeicherten Befehl zu dekodieren und um festzustellen, ob der Befehl in den ersten Teilvorrat oder in den übrigen Vorrat fällt, wobei die Dekodierungssteuermittel (12c) ein erstes Ausgangssignal erzeugen, wenn der Befehl zu dem übrigen Teilvorrat gehört, und ein zweites Ausgangssignal erzeugen, wenn der Befehl in den ersten Teilvorrat fällt, und die zweiten Prozessormittel den Befehl als Antwort auf das erste, in den Dekodierungssteuermitteln (12c) erzeugte Ausgangssignal, ausführen und als Antwort auf das zweite, in den Dekodierungssteuermitteln (12c) erzeugte Ausgangssignal, Befehlsausführung verhindern.

2. Hochgeschwindigkeitsprozessor nach Anspruch 1, dadurch gekennzeichnet, daß die ersten Prozessormittel (12) weiterhin umfassen:

Mehrzweckregister (12d), die an die Dekodierungssteuermittel (12c) angeschlossen sind, um mindestens einen Operanden zu speichern und um ein für den Operanden bezeichnendes Ausgangssignal als Antwort auf das zweite, in den Dekodierungssteuermittel (12c) erzeugte, Ausgangssignal zu erzeugen;

eine arithmetische und logische Einheit (12f), die an die Mehrzweckregister (12d) angeschlossen ist und auf die in den Mehrzweckregistern (12d) erzeugten Ausgangssignale anspricht, um eine Rechenoperation mit dem einen Operand und einem zweiten Operand durchzuführen und ein für die Ergebnisse der Rechenoperation bezeichnendes Ausgangssignal zu erzeugen.

3. Hochgeschwindigkeitsprozessor nach Anspruch 1, dadurch gekennzeichnet, daß

die ersten Prozessormittel (12) in überlappender Betriebsart arbeiten, wobei die Dekodierungssteuermittel (12c) der ersten Prozessormittel (12) einen in den ersten Mitteln gespeicherten Befehl vordekodieren, während die arithmetische und logische Einheit (12f) eine Rechenoperation mit den Operanden durchführt, die mit dem zur Zeit ausgeführten Befehl assoziiert sind.

4. Hochgeschwindigkeitsprozessor nach Anspruch 1 und 3, dadurch gekennzeichnet, daß die Dekodierungssteuermittel weiterhin umfassen:

Adressensteuermittel (12c2; 12c3), die an die zweiten Prozessormittel (10b) angeschlossen sind, um eine Adresseninformation aus dem in den ersten Speichern (12a, 12b) gespeicherten Befehl zu empfangen und um ein zweites Ausgangssignal zu erzeugen, wenn der Befehl in den ersten Teilvorrat des Befehlvorrates fällt;

Adressenvergleichsmittel (12c4), die an einen Eingang der Adressensteuermittel (12c3) und an einen Ausgang der Adressensteuermittel (12c2) angeschlossen sind, um das zweite in den Adressensteuermitteln erzeugte Ausgangssignal mit der von den Adressensteuermitteln empfangenen Adresseninformation zu vergleichen und ein Überlappungssperrsignal zu erzeugen, wenn die mit dem zweiten Ausgangssignal assoziierte Adresseninformation dieselbe ist, wie die von den Adressensteuermitteln empfangene Adresseninformation, wobei das Überlappungssperrsignal die Dekodierungssteuermittel daran hindert, den nächsten in den ersten Speichern (12b) gespeicherten Befehl vorzudekodieren; und

einen Sonderwiederholungspuffer (12c5), um die Ausführung eines Befehls wiederzuholen.

FIGURE 1

FIGURE 2

FIGURE 3

EP 0 157 306 B1

FIGURE 4

EP 0 157 306 B1

<u>20</u>

| 20A INSTRUCTION ACRONYM | 20B INSTRUCTION OPCODE | 20C PERCENT MIX |
|---|---|---|
| BC | 47 | 19.276 |
| L | 58 | 13.290 |
| ST | 50 | 5.841 |
| XC | D7 | 0.554 |
| MVCL | 0E | 0.059 |
| MVC | D2 | 1.536 |

FIGURE 5

FIGURE 6